# FASCICULE DE BREVET EUROPEEN

(11) **EP 4 029 812 B1**
(45) Date de publication et mention de la délivrance du brevet: **15.11.2023**
(21) Numéro de dépôt: 22151176.9
(22) Date de dépôt: 12.01.2022
(51) Int. Cl.: B65G 39/12, B65G 21/06, B65G 21/10, B65G 23/22

(54) **DISPOSITIF DE CONVOYAGE DE MATIÈRE À ARBRE D'ENTRAINEMENT DÉMONTABLE**
MATERIALFÖRDERVORRICHTUNG MIT ABNEHMBARER ANTRIEBSWELLE
DEVICE FOR TRANSPORTING MATERIAL WITH REMOVABLE DRIVE SHAFT

(30) Priorité: 13.01.2021 FR 2100295
(43) Date de publication de la demande: 20.07.2022
(73) Titulaire: Aktid, 73000 Chambery (FR)
(72) Inventeur: SABOT, Bertrand, 73000 CHAMBERY (FR); TOCCHINI, Stéphane, 73000 CHAMBERY (FR); MILIN, Frédéric, 73000 CHAMBERY (FR)
(74) Mandataire: Croonenbroek, Thomas Jakob

(56) Documents cités:
- EP-A1- 3 725 707
- CN-A- 110 304 416
- KR-B1- 101 933 377

## Description

L'invention concerne le domaine des installations de tri de matière et plus particulièrement un dispositif de convoyage et éventuellement de triage (multi-bande ou mono-bande) pour tri (manuel ou automatique) au sein d'une unité de traitement et de valorisation de matière.

Dans le domaine du tri de matière et notamment lors d'un tri manuel, les matières sont amenées aux postes de tri manuel par des dispositifs de convoyage ou convoyeurs. A chaque poste de tri, un opérateur trie manuellement les matières afin de les séparer et place les matières triées sur un convoyeur d'évacuation indépendant ou alors dans une goulotte d'évacuation.

Un dispositif de convoyage comporte classiquement :
- au moins une bande de convoyage, reposant sur une sole de glissement vissée sur des profilés du dispositif de convoyage ;
- un ensemble de galets en contact avec la bande de guidage ;
- des rives de guidage de la matière présente sur le dispositif de convoyage ;
- un caisson d'entrainement de la bande de convoyage, situé à une première extrémité du dispositif de convoyage ;
- un caisson de réglage de tension de la bande de convoyage, situé à une seconde extrémité du dispositif de convoyage.

Un caisson d'entrainement comporte généralement :
- une structure, c'est-à-dire un corps principal constitué d'un ensemble de parois structurelles aptes à soutenir les autres éléments du caisson ;
- un tambour d'entrainement unique, d'une largeur égale à la largeur du dispositif de convoyage et de tri, et autour duquel passe la bande de convoyage.
- un arbre de rotation permettant la rotation du tambour d'entrainement. L'arbre de rotation est mû par un moteur électrique placé sur un des côtés du dispositif de convoyage et de tri. Le moteur électrique peut, par exemple, avoir une puissance de 2.2Kw, permettant une vitesse de déplacement des bandes de convoyage de l'ordre de 35m/min.
- un palier qui assure le guidage en rotation par glissement.
- une frette de serrage qui assure le serrage du tambour sur l'arbre, afin de transmettre les efforts moteur au tambour (rotation du tambour).

EP 3 725 707 A1 divulgue le préambule de la revendication 1.

De tels dispositifs de convoyage sont amenés à fonctionner tous les jours sans discontinuer et vingt-quatre heures par jour. Il est parfois nécessaire de devoir réaliser des opérations de maintenance, par exemple en cas de casse d'un élément du dispositif de convoyage. C'est notamment le cas de l'arbre du caisson d'entrainement.

Cependant, l'architecture décrite ci-dessus ne permet pas une maintenance aisée du dispositif de convoyage, du fait de la difficulté d'accès à l'arbre, car il est nécessaire de démonter le tambour, pièce lourde, volumineuse et donc difficile à manipuler.

L'invention a notamment pour but de fournir un dispositif de convoyage permettant une maintenance facilitée de l'arbre de rotation.

A cet effet, l'invention a pour objet un dispositif de convoyage de matériaux comprenant au moins une bande de convoyage et un caisson d'entrainement de la bande de convoyage, le caisson d'entrainement comprenant une structure, un tambour de mise en mouvement de la bande de convoyage apte à tourner au sein de la structure, un arbre de rotation auquel est fixé le tambour par un moyen de serrage, et un palier guidant l'arbre de rotation et fixé à la structure, caractérisé en ce que le caisson d'entrainement comprend de chaque côté une butée mécanique fixée à la structure et apte à soutenir le tambour lorsque le palier et l'arbre de rotation sont démontés.

Ainsi, selon l'invention, il est possible de démonter l'arbre de rotation sans avoir à démonter le tambour or de la structure. En effet, lors de la maintenance de l'arbre de rotation, le palier est démonté, le tambour est soutenu par la butée mécanique, et l'arbre de rotation peut ainsi être retiré facilement après desserrage du moyen de serrage.

Suivant d'autres caractéristiques optionnelles du dispositif de convoyage prises seules ou en combinaison :
- la butée mécanique est fixée à la structure grâce à des moyens de fixation, tels que des vis ;
- la butée mécanique constitue une cloche anti-enroulement renforcée mécaniquement et dimensionnée afin d'être à une distance du tambour inférieure à 2mm.
- la butée mécanique constitue une cloche anti-enroulement renforcée mécaniquement et dimensionnée afin de soutenir le tambour lorsque le palier et l'arbre de rotation sont démontés.
- la cloche anti-enroulement comporte des ergots permettant d'autocentrer la cloche anti-enroulement dans le tambour.
- la butée mécanique et le palier sont reliés par des moyens de liaison aptes à transmettre à l'un un changement de position de l'autre.
- le palier est fixé sur une paroi horizontale de la structure.
- le caisson d'entrainement est muni d'un capot d'étanchéité apte à assurer l'étanchéité du convoyeur et protéger le palier et l'arbre de rotation.
- le moyen de serrage est une frette de serrage.

### Brève description des figures

L'invention sera mieux comprise à la lecture de la description qui va suivre donnée uniquement à titre d'exemple et faite en se référant aux dessins annexés dans lesquels :
[Fig. 1] la figure 1 illustre un exemple de dispositif de convoyage selon l'invention ;
[Fig. 2] la figure 2 illustre en détail l'extrémité du dispositif de convoyage de la figure 1 comportant le caisson d'entrainement ;
[Fig. 3] la figure 3 illustre en détail une des extrémités du caisson d'entrainement ;
[Fig. 4] la figure 4 est une coupe longitudinale du caisson d'entrainement montrant la même extrémité que sur la figure 3 ;
[Fig. 5] la figure 5 illustre le démontage du palier ;
[Fig. 6] la figure 6 illustre le démontage de l'arbre de rotation.

### Description détaillée

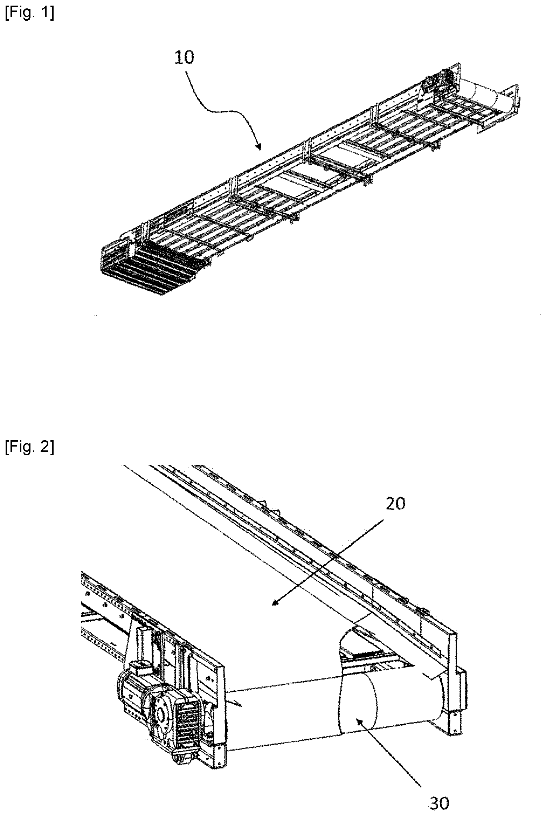

On se réfère maintenant à la figure 1, qui décrit un exemple de dispositif de convoyage 10 et éventuellement de tri de matériaux selon l'invention.

Le dispositif comprend au moins une bande de convoyage 20 et un caisson d'entrainement 30 de la bande de convoyage 20. La figure 2 illustre en détail l'extrémité du dispositif de convoyage 10 comportant le caisson d'entrainement 30, ainsi que la bande de convoyage 20.

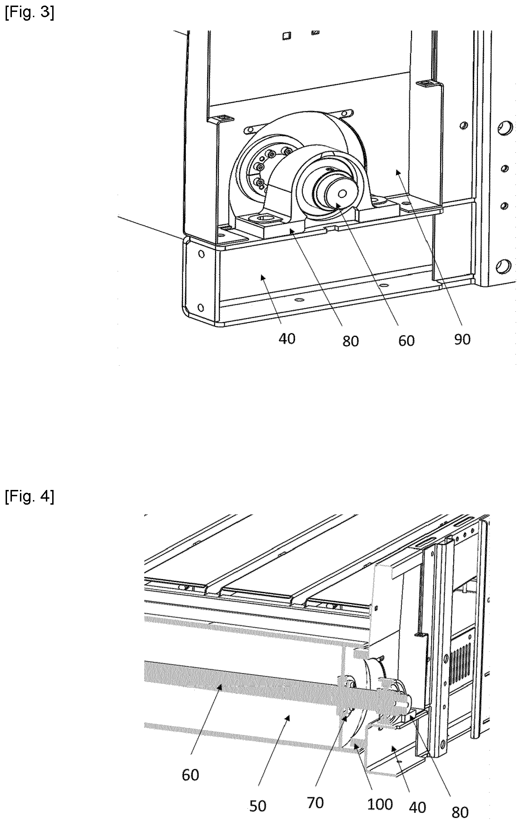

La figure 3 illustre en détail une des extrémités du caisson d'entrainement 30 sur laquelle on peut voir différents éléments constituant le caisson d'entraînement 30. La figure 4 est une coupe longitudinale du caisson d'entrainement 30 montrant la même extrémité que sur la figure 3.

Le caisson d'entrainement 30 comprend une structure 40 formant un châssis. Ce châssis supporte un tambour 50 de mise en mouvement de la bande de convoyage 20 apte à tourner au sein-même de la structure 40.

Le caisson d'entrainement 30 comporte un arbre de rotation 60 auquel est fixé le tambour 50 par un moyen de serrage 70. Le moyen de serrage 70 peut par exemple constituer une frette de serrage.

Le caisson d'entrainement 30 comporte également un palier 80 guidant l'arbre de rotation 60. Le palier 80 est fixé à la structure 40.

Selon l'exemple illustré sur les figures, le caisson d'entrainement 30 est muni d'un capot d'étanchéité 90, permettant d'assurer l'étanchéité du convoyeur jusqu'à la trémie d'évacuation et ainsi protéger le palier 80 et l'arbre de rotation 60.

Enfin, comme l'illustre la figure 4, le caisson d'entrainement 30 comprend de chaque côté à chaque extrémité de l'arbre de rotation une butée mécanique 100 fixée à la structure 40 grâce à des moyens de fixation 110 (figure 4). Selon un exemple de réalisation, les moyens de fixation 110 de la butée mécanique 100 sur la structure 40, comporte des vis comme illustré sur la figure 4.

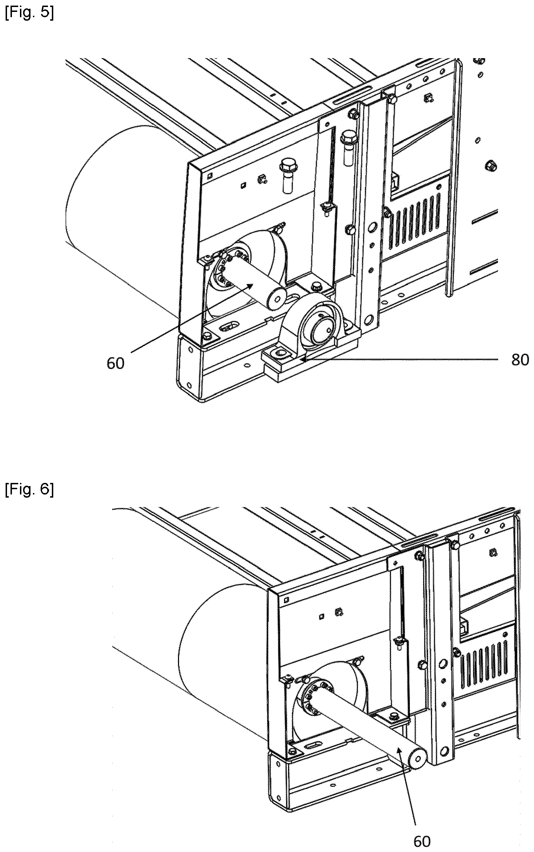

La butée mécanique 100 est configurée pour soutenir le tambour 50 lorsque le palier 80 et l'arbre de rotation 60 sont démontés (voir figures 5 et 6).

Comme visible sur la figure 4, lorsque le palier 80 et l'arbre de rotation 60 sont démontés, alors le tambour 50 se met en appui sur le haut de la butée mécanique 100. Il est ainsi possible de retirer l'arbre de rotation 60 du caisson d'entrainement 30, sans avoir à manipuler le tambour 50 très lourd. La manutention de l'arbre 60 est ainsi grandement facilitée.

Selon un mode de réalisation illustré sur les figures, la butée mécanique 100 constitue une cloche anti-enroulement. Une telle cloche est utilisée pour protéger l'arbre de rotation 60, en évitant que des déchets tels que des câbles tombent sur l'arbre de rotation et finissent, après enroulement, par le briser.

Selon l'invention, par rapport à une cloche anti-enroulement classique, la cloche est renforcée mécaniquement, et dimensionnée (réhaussée) afin d'être au plus proche du tambour, tout en le laissant libre en rotation autour de l'arbre de rotation 60. Par « au plus proche » on entend que la butée mécanique 100 et le tambour 50 sont distants d'une distance permettant à la fois :
- la rotation du tambour 50 dans la structure 40 ;
- un démontage de l'arbre de rotation 60 lorsque le palier 80 et l'arbre de rotation 60 sont démontés.

Cette distance peut être déterminée empiriquement, en fonction des dimensions du dispositif de convoyage 10. A titre d'exemple, la distance entre la butée mécanique 100 et le tambour 50 peut être égale à 2mm.

Alternativement, ou conjointement, la cloche anti-enroulement comporte des ergots, par exemple en téflon, permettant d'autocentrer la cloche dans le tambour, afin de la positionner facilement tout en permettant une rotation libre du tambour.

Selon un mode de réalisation, le palier 80 est relié à la butée mécanique 100 de façon à ce qu'un réglage de la position du palier 80 se répercute directement, avec ou sans modification, sur la position de la butée mécanique 100. Pour ce faire, des moyens de liaison sont positionnés entre le palier 80 et la butée mécanique 100.

Selon un mode de réalisation (figures 3 à 6), le palier 80 est fixé sur une paroi horizontale (lorsque le dispositif 10 est posé au sol) de la structure 40. Ainsi, le palier 80 peut être démonté facilement, facilitant ainsi la manutention du dispositif 10.

### Liste de références numériques

- 10: : dispositif de convoyage et de tri de matériaux
- 20: : bande de convoyage
- 30: : caisson d'entrainement de la bande de convoyage 20
- 40: : structure (corps principal structurel) du caisson d'entrainement 30, formant un châssis
- 50: : tambour de mise en mouvement de la bande de convoyage 20
- 60: : arbre de rotation
- 70: : moyen de serrage du tambour 50 sur l'arbre 60
- 80: : palier pour guider l'arbre de rotation 60
- 90: : capot d'étanchéité
- 100: : butée mécanique fixée à la structure 40
- 110: : moyens de fixation de la butée mécanique 100 à la structure 40

## Revendications

1. Dispositif de convoyage (10) de matériaux comprenant au moins une bande de convoyage (20) et un caisson d'entrainement (30) de la bande de convoyage (20), le caisson d'entrainement (30) comprenant une structure (40), un tambour (50) de mise en mouvement de la bande de convoyage (20) apte à tourner au sein de la structure (40), un arbre de rotation (60) auquel est fixé le tambour (50) par un moyen de serrage (70), et un palier (80) guidant l'arbre de rotation (60) et fixé à la structure (40), **caractérisé en ce que** le caisson d'entrainement (30) comprend de chaque côté une butée mécanique (100) fixée à la structure (40) et apte à soutenir le tambour (50) lorsque le palier (80) et l'arbre de rotation (60) sont démontés.

2. Dispositif (10) selon la revendication précédente, dans lequel la butée mécanique (100) est fixée à la structure (40) grâce à des moyens de fixation (110), tels que des vis.

3. Dispositif (10) selon l'une des revendications précédentes , dans lequel la butée mécanique (100) constitue une cloche anti-enroulement renforcée mécaniquement et dimensionnée afin d'être à une distance du tambour (50) inférieure à 2mm.

4. Dispositif (10) selon l'une des revendications précédentes, dans lequel la butée mécanique (100) constitue une cloche anti-enroulement renforcée mécaniquement et dimensionnée afin de soutenir le tambour (50) lorsque le palier (80) et l'arbre de rotation (60) sont démontés.

5. Dispositif (10) selon l'une des revendications 3 et 4, dans lequel la cloche anti-enroulement comporte des ergots permettant d'autocentrer la cloche anti-enroulement dans le tambour (50).

6. Dispositif (10) selon l'une des revendications précédentes, dans lequel la butée mécanique (100) et le palier (80) sont reliés par des moyens de liaison aptes à transmettre à l'un un changement de position de l'autre.

7. Dispositif (10) selon l'une des revendications précédentes, dans lequel le palier (80) est fixé sur une paroi horizontale de la structure (40).

8. Dispositif (10) selon l'une des revendications précédentes, dans lequel le caisson d'entrainement (30) est muni d'un capot d'étanchéité (90) apte à assurer l'étanchéité du convoyeur et protéger le palier (80) et l'arbre de rotation (60).

9. Dispositif (10) selon l'une des revendications précédentes, dans lequel le moyen de serrage (70) est une frette de serrage.

## Patentansprüche

1. Vorrichtung (10) zum Fördern von Materialien, umfassend zumindest ein Förderband (20) und einen Kasten (30) für den Antrieb des Förderbands (20), wobei der Antriebskasten (30) Folgendes umfasst: eine Struktur (40), eine Trommel (50) zur Bewegung des Förderbands (20), die sich innerhalb der Struktur (40) drehen kann, eine Drehwelle (60), an der die Trommel (50) durch ein Spannmittel (70) befestigt ist, und ein Lager (80), das die Drehwelle (60) führt und an der Struktur (40) befestigt ist, **dadurch gekennzeichnet, dass** der Antriebskasten (30) auf jeder Seite einen mechanischen Anschlag (100) umfasst, der an der Struktur (40) befestigt ist und die Trommel (50) stützen kann, wenn das Lager (80) und die Drehwelle (60) demontiert sind.

2. Vorrichtung (10) nach dem vorangehenden Anspruch, wobei der mechanische Anschlag (100) mit Hilfe von Befestigungsmitteln (110), wie beispielsweise Schrauben, an der Struktur (40) befestigt ist.

3. Vorrichtung (10) nach einem der vorangehenden Ansprüche, wobei der mechanische Anschlag (100) eine mechanisch verstärkte Anti-Aufroll-Glocke bildet und so bemessen ist, dass er um weniger als 2 mm von der Trommel (50) beabstandet ist.

4. Vorrichtung (10) nach einem der vorangehenden Ansprüche, wobei der mechanische Anschlag (100) eine mechanisch verstärkte Anti-Aufroll-Glocke bildet und so bemessen ist, dass er die Trommel (50) stützt, wenn das Lager (80) und die Drehwelle (60) demontiert sind.

5. Vorrichtung (10) nach einem der Ansprüche 3 und 4, wobei die Anti-Aufroll-Glocke Nasen aufweist, die eine Selbstzentrierung der Anti-Aufroll-Glocke in der Trommel (50) ermöglichen.

6. Vorrichtung (10) nach einem der vorangehenden Ansprüche, wobei der mechanische Anschlag (100) und das Lager (80) durch Verbindungsmittel verbunden sind, die eine Positionsänderung des anderen auf das eine übertragen können.

7. Vorrichtung (10) nach einem der vorangehenden Ansprüche, wobei das Lager (80) an einer horizontalen Wand der Struktur (40) befestigt ist.

8. Vorrichtung (10) nach einem der vorangehenden Ansprüche, wobei der Antriebskasten (30) mit einer Dichtungskappe (90) versehen ist, die die Dichtheit des Förderers gewährleisten und das Lager (80) und die Drehwelle (60) schützen kann.

9. Vorrichtung (10) nach einem der vorangehenden Ansprüche, wobei das Spannmittel (70) eine Spannbuchse ist.

## Claims

1. Device (10) for conveying materials comprising at least one conveying belt (20) and a conveying belt (20) drive casing (30), the drive casing (30) comprising a structure (40), a drum (50) for setting the conveying belt (20) in motion that is capable of rotating in the structure (40), a rotation shaft (60) to which the drum (50) is fixed by a clamping means (70), and a bearing (80) guiding the rotation shaft (60) and fixed to the structure (40), **characterized in that** the drive casing (30) comprises, on each side, a mechanical abutment (100) fixed to the structure (40) and capable of supporting the drum (50) when the bearing (80) and the rotation shaft (60) are removed.

2. Device (10) according to the preceding claim, wherein the mechanical abutment (100) is fixed to the structure (40) using fixing means (110), such as screws.

3. Device (10) according to one of the preceding claims, wherein the mechanical abutment (100) constitutes an anti-winding guard that is mechanically reinforced and dimensioned so as to be less than 2mm away from the drum (50) .

4. Device (10) according to one of the preceding claims, wherein the mechanical abutment (100) constitutes an anti-winding guard that is mechanically reinforced and dimensioned so as to support the drum (50) when the bearing (80) and the rotation shaft (60) are removed.

5. Device (10) according to one of Claims 3 and 4, wherein the anti-winding guard comprises lugs that allow the anti-winding guard to be self-centred in the drum (50) .

6. Device (10) according to one of the preceding claims, wherein the mechanical abutment (100) and the bearing (80) are linked by link means capable of transmitting to one a change of position of the other.

7. Device (10) according to one of the preceding claims, wherein the bearing (80) is fixed onto a horizontal wall of the structure (40).

8. Device (10) according to one of the preceding claims, wherein the drive casing (30) is provided with a sealing cover (90) capable of ensuring the seal-tightness of the conveyor and protecting the bearing (80) and the rotation shaft (60).

9. Device (10) according to one of the preceding claims, wherein the clamping means (70) is a shrink ring.
